# EUROPÄISCHE PATENTSCHRIFT

(11) **EP 0 721 878 B1**
(45) Veröffentlichungstag und Bekanntmachung des Hinweises auf die Patenterteilung: **15.03.2000**
(21) Anmeldenummer: 95810809.4
(22) Anmeldetag: 21.12.1995
(51) Int. Cl.: B62D 27/06, B61D 17/04

(54) **Baugruppenverbindung**
Connection of structural components
Connexion de sous-groupes

(30) Priorität: 13.01.1995 CH 10795
(43) Veröffentlichungstag der Anmeldung: 17.07.1996
(73) Patentinhaber: Alusuisse Technology & Management AG, 8212 Neuhausen am Rheinfall (CH)
(72) Erfinder: Zehnder, Jürg, CH-8142 Uitikon (CH); Leutenegger, Simon, DH-8037 Zürich (CH); Ritzl, Antal, CH-8047 Zürich (CH)

(56) Entgegenhaltungen:
- EP-A- 0 151 550
- DE-A- 1 480 643
- DE-A- 1 555 995

## Beschreibung

Die Erfindung betrifft ein Bauteil nach dem Oberbegriff von Anspruch 1.

Zur Rationalisierung sind Bestrebungen im Gange, Aufbaustrukturen wie Aufbauten oder Wagenkasten von Schienen- und Strassenfahrzeugen aus vollständig ausgerüsteten Baugruppen zusammenzufügen. Damit auf aufwendige Montagevorrichtungen verzichtet werden kann, soll beim Zusammenbau von einzelnen Baugruppen nach Möglichkeit nur noch genietet und/ oder geschraubt werden, wobei die Einhaltung der Toleranzen trotzdem gewährleistet sein muss.

Ein Bauteil der eingangs genannten Art ist aus DE-A-1480643 bekannt.

Angesichts dieser Gegebenheiten haben sich die Erfinder die Aufgabe gestellt, eine für Bauteile bzw. Baugruppen der eingangs erwähnten Art geeignete Verbindung zu schaffen, mit welcher in Modulbauweise vorgerüstete Baugruppenverbindungen ohne Richtaufwand einfach und kostengünstig zusammengefügt werden können.

Zur erfindungsgemässen Lösung der Aufgabe führt ein Bauteil mit dem Merkmalen von Anspruch 1.

Die Erfindung weiterbildende Merkmale sind Gegenstand von abhängigen Patentansprüchen. Zur Vereinfachung wird im folgenden der Begriff "Profil" zur Charakterisierung der auch als Anschlussprofil bezeichneten Ausgestaltung der Baugruppen im Verbindungsbereich verwendet.

Die sich mit der Erfindung ergebenden Baugruppenverbindungen haben gegenüber dem konventionellen Zusammenbau von Aufbaustrukturen den Vorteil einer schnellen und dennoch präzisen Montage.

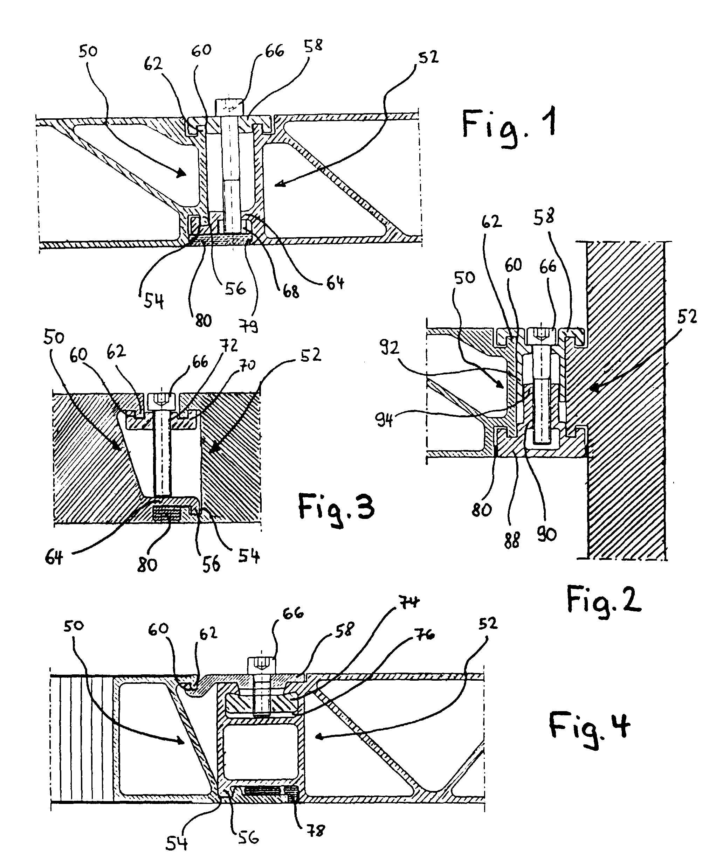

Besonders bevorzugte Ausführungsformen der erfindungsgemässen Baugruppenverbindung zeichnen sich wie folgt aus:
1. Die beiden aneinanderstossenden Profile sind über eine in der Profillängsachse verlaufende Aussenleiste mit zwei parallel zueinander angeordneten zweiten Längsnuten, in die an jedem Profil angeformte zweite Längsstreifen eingreifen, miteinander verbunden und die Aussenleiste ist durch zugbelastete Schrauben an den Profilen kraftschlüssig fixiert (Fig. 1).
2. Die beiden aneinanderstossenden Profile sind über eine in der Profillängsachse verlaufende erste Aussenleiste mit zwei parallel zueinander angeordneten zweiten Längsnuten, in die an jedem Profil angeformte zweite Längsstreifen eingreifen, miteinander verbunden, wobei die erste Aussenleiste durch zugbelastete Schrauben an einer der ersten Aussenleiste gegenüberstehenden zweiten Aussenleiste, welche zur Verhakung der beiden Profile die ersten Längsstreifen und/oder ersten Längsnuten ebenfalls aufweist, kraftschlüssig fixiert (Fig. 2).
3. Die beiden aneinanderstossenden Profile sind über eine in Profillängsachse verlaufende Innenleiste mit zwei parallel zueinander angeordneten zweiten Längsnuten, in die an jedem Profil angeformte zweite Längsstreifen eingreifen, miteinander verbunden und die Innenleiste ist durch druckbelastete, in Gewinde im Längsstreifen eingreifende und sich an einem Anschlagstreifen eines Profils abstützende Schrauben an den Profilen kraftschlüssig fixiert (Fig. 3).
4. Die beiden aneinanderstossenden Profile sind über eine in der Profillängsachse verlaufende Aussenleiste mit einer zweiten Längsnut, in die ein an einem der Profile angeformter Längsstreifen eingreift, miteinander verbunden und die Aussenleiste ist über Schrauben und innerhalb einer längslaufenden hinterschnittenen Nut angeordnete Nutensteine kraftschlüssig fixiert (Fig. 4).

Bevorzugt bestehen die Baugruppen bzw. deren Anschlussprofile aus einer Leichtmetallegierung, insbesondere aus einer Aluminiumlegierung, aus Kunststoff oder aus einem Leichtmetall/Kuststoff-Verbund. Längslaufende Fugen, die sich zwischen aneinanderstossenden Profilen bilden, können mit einer Dichtmasse gefüllt werden oder in die Fuge wird ein längslaufender Abdeckstab aus Metall, Gummi oder Kunststoff eingesetzt.

Zusätzlich zur Schraub-, Klemm- oder Nietverbindung kann zwischen Baugruppen bzw. den diesen integral angeformten Profilen und den diesen in der Verbindung anliegenden Klemmleisten zur Verklebung und damit zur weiteren Sicherung der Verbindung ein geeigneter Klebstoff eingebracht werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen Querschnitt durch eine erste Ausführungsform einer Baugruppenverbindung;
- Fig. 2: einen Querschnitt durch eine Variante von Fig. 1;
- Fig. 3: einen Querschnitt durch eine zweite Ausführungsform einer Baugruppenverbindung;
- Fig. 4: einen Querschnitt durch eine dritte Ausführungsform einer Baugruppenverbindung.

In den Fig. 1 bis 4 sind verschiedene Ausführungsformen von Baugruppenverbindungen dargestellt. Allen Ausführungsformen gemeinsam ist die spezielle Ausbildung der beiden miteinander zu verbindenden Baugruppen im Verbindungsbereich, d.h. an jener Stelle, wo die Baugruppen entlang einer gemeinsamen Stossfläche aufeinandertreffen. Der in der jeweiligen Baugruppe integrierte und profilierte, zum Anschluss an eine nächste Baugruppe vorgesehene Verbindungsteil wird hier auch als Anschlussprofil oder vereinfacht als Profil bezeichnet. In einer Baugruppenverbindung stossen demnach im Verbindungsbereich jeweils zwei Profile von zwei zu verbindenden Baugruppen entlang der gemeinsamen Stossfläche zusammen.

Bei einer ersten Ausführungsform gemäss Fig. 1 stossen zwei Profile 50, 52 mit parallel zueinander liegenden Profillängsachsen seitlich aneinander. Das eine Profil 52 weist eine erste Längsnut 54 auf, in welche ein am ersten Profil 50 angeformter erster Längsstreifen 56 formschlüssig eingreift. Eine in der Profillängsachse verlaufende Aussenleiste 58 mit zwei parallel zueinander angeordneten zweiten Längsnuten 60 verbindet die beiden Profile 50, 52 derart, dass an den Profilen 50, 52 angeformte zweite Längsstreifen 62 in die zweiten Längsnuten 60 der Aussenleiste 58 eingreifen. Schrauben 66 durchsetzen die Aussenleiste 58 und bilden mit Muttern 68, die einem Anschlagstreifen 64 als Gegenanschlag anliegen, eine kraftschlüssige Schraubverbindung. Die sich durch die Verbindung der beiden Profile 50, 52 ergebende Längsfuge 79 ist mit einem Deckstab 80 aus beispielsweise Gummi abgedeckt.

Bei einer Variante der in Fig. 1 gezeigten Ausführungsform ist gemäss Fig. 2 eine zweite Aussenleiste 88 angeordnet, die der ersten Aussenleiste 58 gegenüber steht. Die zweite Aussenleiste 88 weist nun die ersten Längsnuten 54 auf, in welche die an den Profilen 50, 52 angeformten ersten Längsstreifen 56 eingreifen. Die die Aussenleiste 58 durchsetzenden Schrauben 66 stehen mit korrespondierenden Gewindebohrungen 90 in der zweiten Aussenleiste 88 in Eingriff, wodurch eine klemmende, kraftschlüssige Verbindung der beiden Profile 50, 52 gewährleistet ist. Diese Ausführungsvariante bietet den Vorteil, dass an den Profilen 50, 52 keine Bohrungen vorgesehen werden müssen und der Zusammenbau durch eine vormontierte Klemmleiste bestehend aus den zwei Aussenleisten 58, 88 und der sie verbindenden Schrauben 66 (Imbusschrauben) wesentlich vereinfacht wird.

Bei der in Fig.3 gezeigten Ausführungsform ist an Stelle einer Aussenleiste eine Innenleiste 70 eingesetzt. Die Innenleiste 70 ist mit Gewindebohrungen 72 versehen, mit welchen Schrauben 66 in Eingriff stehen. Diese Schrauben 66 ergeben mit einem Anschlagstreifen 64 eine Spreizverbindung, so dass die Schrauben 66 insgesamt druckbelastet sind.

Die Ausführungsform nach Fig.4 ist mit einer Aussenleiste 58 mit einer Längsnut 60 ausgestattet, in die ein Längsstreifen 62 des einen Profils 50 eingreift. Die Aussenleiste 58 ist über Schrauben 66 mit dem zweiten Profil 52 verbunden. Diese Verbindung erfolgt über Nutensteine 76, die in einer hinterschnittenen Nut 74 angeordnet sind und Muttern für die Schrauben 66 bilden. Die Fuge 79 ist hier mit einer Dichtmasse 78 aufgefüllt.

Die hier beschriebenen Längsnuten 54 und 60 bzw. Längsstreifen 56 und 62 können selbstverständlich sämtliche bekannten Ausführungsformen dieser der formschlüssigen Verbindung dienenden Teile umfassen und sind insbesondere nicht auf die in der Zeichnung dargestellten Ausführungsformen beschränkt. So können beispielsweise die Einzelelemente querschnittlich keilförmig oder halbkreisförmig ausgestaltet oder auch mit einer Sägezahnausbildung versehen sein.

## Patentansprüche

1. Bauteil, insbesondere eine aus Baugruppen zusammengefügte Aufbaustruktur, mit mindestens zwei entlang einer gemeinsamen Stossfläche miteinander verbundenen Anschlussprofilen (50, 52) mit parallel zueinander liegenden Profillängsachsen, wobei an den Profilen (50, 52) ineinandergreifende und/oder einander hintergreifende, die Profile formschlüssig miteinander verhakende erste Längsstreifen (56) und/ oder erste Längsnuten (54) angeformt und die Profile (50, 52) in ihrer gegenseitigen Lage über Niet-, Klemm- oder Schraubverbindungen kraftschlüssig fixiert sind,
dadurch gekennzeichnet, dass
die beiden aneinanderstossenden Profile (50, 52) über eine in der Profillängsachse verlaufende Leiste (58, 60) mit zwei parallel zueinander angeordneten zweiten Längsnuten (60), in die an jedem Profil (50, 52) angeformte zweite Längsstreifen (62) eingreifen, miteinander verbunden sind.

2. Bauteil nach Anspruch 1, dadurch gekennzeichnet, dass die Leiste als Aussenleiste (58) durch zugbelastete Schrauben (66) an den Profilen (50, 52) kraftschlüssig fixiert ist.

3. Bauteil nach Anspruch 1, dadurch gekennzeichnet, dass die Leiste als erste Aussenleiste ( 58) durch zugbelastete Schrauben (66) an einer der ersten Aussenleiste (58) gegenüberstehenden, die beiden Profile (50, 52) miteinander verhakenden zweiten Aussenleiste (88) kraftschlüssig fixiert ist.

4. Bauteil nach Anspruch 1, dadurch gekennzeichnet, dass die Leiste als Innenleiste (70) durch druckbelastete, in Gewindebohrungen (72) der Innenleiste (70) eingreifende und sich an einem Anschlagstreifen (64) abstützende Schrauben (66) an den Profilen (50, 52) kraftschlüssig fixiert ist.

5. Bauteil nach Anspruch 1, dadurch gekennzeichnet, dass die Leiste als Aussenleiste (58) über Schrauben (66) und innerhalb einer längslaufenden hinterschnittenen Nut (74) angeordnete Nutensteine (76) kraftschlüssig fixiert ist.

6. Bauteil nach einem der Ansprüche 1 bis 5, dadurch gekennzeichnet, dass die Baugruppen bzw. deren Anschlussprofile (50, 52) aus einer Leichtmetallegierung, insbesondere aus einer Aluminiumlegierung, aus Kunststoff oder aus einem Leichtmetall/Kunststoff-Verbund bestehen.

7. Bauteil nach einem der Ansprüche 1 bis 6, dadurch gekennzeichnet, dass in zwischen aneinanderstossenden Profilen (50, 52) sich bildenden längslaufenden Fugen (79) eine Dichtmasse (78) oder ein längslaufender Abdeckstab (80) aus Metall, Gummi oder Kunststoff eingesetzt ist.

8. Bauteil nach einem der Ansprüche 1 bis 7, dadurch gekennzeichnet, dass zusätzlich zur Niet-, Klemm- oder Schraubverbindung ein Klebstoff zwischen den Leisten (58, 70, 88) und den Profilen (50, 52) vorhanden ist.

## Claims

1. Component, in particular a structure assembled from modules, comprising at least two connecting profiles (50, 52) with parallel longitudinal axes connected together along a common abutting surface, first longitudinal strips (56) and/or first longitudinal grooves (54) engaging one inside the other and/or one behind the other and hooking the profiles together in a positive manner being moulded on to the profiles (50, 52) and the profiles (50, 52) being non-positively fixed in their mutual positions by means of riveted, clamping or screw joints, characterised in that the two abutting profiles (50, 52) are connected together by means of a strip (58, 60) extending along the longitudinal axis of the profile and having two second longitudinal grooves (60) arranged parallel to one another and engaged by second longitudinal strips (62) moulded on to each profile (50, 52).

2. Component according to claim 1, characterised in that the strip forming an outer strip (58) is non-positively fixed to the profiles (50, 52) by means of screws (66) under tensile stress.

3. Component according to claim 1, characterised in that the strip forming a first outer strip (58) is non-positively fixed to a second outer strip (88) situated opposite the first outer strip (58) and hooking the two profiles (50, 52) together by means of screws (66) under tensile stress.

4. Component according to claim 1, characterised in that the strip forming an inner strip (70) is non-positively fixed to the profiles (50, 52) by means of screws (66) under compressive stress engaging in threaded bores (72) in the inner strip (70) and supported on a stop strip (64).

5. Component according to claim 1, characterised in that the strip forming an outer strip (58) is non-positively fixed by means of screws (66) and sliding blocks (76) arranged within a longitudinally extending undercut groove (74).

6. Component according to one of claims 1 to 5, characterised in that the modules or the connecting profiles (50, 52) thereof consist of a light-metal alloy, in particular an aluminium alloy, plastic or a light-metal/plastic composite.

7. Component according to one of claims 1 to 6, characterised in that a sealing compound (78) or a longitudinally extending cover fillet (80) made of metal, rubber or plastic is inserted into longitudinally extending joints (79) forming between abutting profiles (50, 52).

8. Component according to one of claims 1 to 7, characterised in that an adhesive is provided between the strips (58, 70, 88) and the profiles (50, 52) in addition to the riveted, clamping or screw joint.

## Revendications

1. Composant, en particulier superstructure constituée de l'assemblage de sous-groupes, comportant au moins deux profilés de raccordement (50, 52) reliés l'un à l'autre le long d'une surface de jonction commune, et dont les axes longitudinaux sont disposés parallèlement l'un à l'autre, tandis que des premières nervures longitudinales (56) et/ou des premières rainures longitudinales (54), qui s'engagent l'une dans l'autre et/ou s'accrochent l'une à l'autre par l'arrière et accrochent les profilés l'un à l'autre en correspondance géométrique, sont formées sur les profilés (50, 52), et les profilés (50, 52) sont fixés en correspondance mécanique dans leur position mutuelle par l'intermédiaire de liaisons rivetées, serrées ou vissées,
caractérisé en ce que les deux profilés (50, 52) qui viennent se joindre mutuellement sont reliés l'un à l'autre par une languette (58, 60) s'étendant suivant l'axe longitudinal du profilé et comportant deux deuxièmes rainures longitudinales (60) disposées parallèlement l'une à l'autre, dans lesquelles s'engagent des deuxièmes nervures longitudinales (62) formées sur chaque profilé (50, 52).

2. Composant selon la revendication 1, caractérisé en ce que la languette servant de languette extérieure (58) est fixée en correspondance mécanique sur les profilés (50, 52) par des vis (66) sollicitées en traction.

3. Composant selon la revendication 1, caractérisé en ce que la languette servant de première languette extérieure (58) est fixée en correspondance mécanique par des vis (66) sollicitées en traction sur une deuxième languette extérieure (88) opposée à la première languette extérieure (58) et accrochant l'un à l'autre les deux profilés (50, 52).

4. Composant selon la revendication 1, caractérisé en ce que la languette servant de languette intérieure (70) est fixée en correspondance mécanique sur les profilés (50, 52) par des vis (66) sollicitées en compression, qui s'engagent dans des alésages filetés (72) de la languette intérieure (70) et qui s'appuient sur une nervure de butée (64).

5. Composant selon la revendication 1, caractérisé en ce que la languette servant de languette extérieure (58) est fixée en correspondance mécanique par des vis (66) et par des coulisseaux (76) disposés à l'intérieur d'une rainure (74) longitudinale en contre-dépouille.

6. Composant selon l'une des revendications 1 à 5, caractérisé en ce que les sous-groupes ou leurs profilés de raccordement (50, 52) sont constitués d'un alliage de métaux légers, en particulier d'un alliage d'aluminium, de matière plastique ou d'un composite de métaux légers/matière plastique.

7. Composant selon l'une des revendications 1 à 6, caractérisé en ce que dans les joints (79) longitudinaux qui sont formés entre des profilés (50, 52) mutuellement jointifs, on dispose une pâte d'étanchéité (78) ou un barreau longitudinal de recouvrement (80) en métal, en caoutchouc ou en matière plastique.

8. Composant selon l'une des revendications 1 à 7, caractérisé en ce qu'en plus de la liaison rivetée, serrée ou vissée, il présente une colle entre les languettes (58, 70, 88) et les profilés (50, 52).
